# EUROPEAN PATENT SPECIFICATION

(11) **EP 1 346 124 B1**
(45) Date of publication and mention of the grant of the patent: **21.12.2005**
(21) Application number: 01983889.5
(22) Date of filing: 14.11.2001
(51) Int. Cl.: E05F 15/20

(54) **CAMERA SUPERVISED MOTION SAFETY SYSTEM**
KAMERAÜBERWACHTES BEWEGUNGSSICHERHEITSSYSTEM
SYSTEME DE SECURITE PERMETTANT LA SURVEILLANCE DE MOUVEMENTS PAR CAMERA

(30) Priority: 01.12.2000 SE 0004439
(43) Date of publication of application: 24.09.2003
(73) Proprietor: HÜBNER GmbH, D-34123 Kassel (DE)
(72) Inventor: BARENDT, Leif, S-240 13 Genarp (SE)
(74) Representative: WALTHER, WALTHER & HINZ Patentanwälte - European Patent Attorneys
(86) International application number: PCT/SE2001/002535
(87) International publication number: WO 2002/044505

(56) References cited:
- EP-A2- 0 853 299
- WO-A1-00/47511
- DE-A1- 19 522 760
- US-A- 5 001 557
- US-A- 5 387 768

## Description

The present invention generally relates to a safety system for doors and footsteps etc., in particular for use in trains, trams, buses, ships and other transport vehicles, but also for use with swinging doors, sliding doors, shutters, slidable roof valves etc. and for use in real properties, platforms and other places. The object of the invention is to avoid accidents which may occur if the doors are being opened or closed unintentionally while a person or an object is approaching the door or is present in the door opening, for instance so that the person or the object falls out or alternatively becomes clamped by the door or between the doors, or that the person becomes clamped at the rear edge of the door, or if a footstep is raised or lowered, respectively, or is expelled or retracted, respectively while a person or some object is approaching said footstep, or in co-operating, preferably synchronized footsteps and doors in a non allowed position while the door is being opened or is being closed, respectively.

For avoiding accidents at doors, footsteps and equivalent means there are at present generally used mechanical or electronic clamp protection means which are mounted in clamp ribs at the edges of the doors and which are formed with some types of switch mechanisms which stop the movement of the door, or inverts the door movement from closing to opening position if the clamp protection means is actuated.

The clamp protection means also may be formed with some type of touch free sensor, like an IR sensor or a similar means, which provides a corresponding clamp protection function. There are also other types of clamp protection means making use of inductive transmitters which scan the motion of for instance a cog wheel or a similar means, and which initiates the clamp protection function when the movement of such cog wheel is slowed down for the reason that the door leaf comes into engagement with some obstacle.

Most priorly known apparatus are formed so as not to give an indication until a person or an object is located in between the doors or between a door and a door frame and comes into physical contact with doors and/or door frames, whereby the person or the object may be hurt or damaged. If such a system should fail this may have serious consequences.

The said priorly known systems also are not integrated with systems for monitoring expelling or retracting movements, respectively, of a foot step of the type which is presently used in buses, trains, trams and other places. The known systems normally also do not have any possibility of indicating if an object or a person is approaching the door, or to indicate the distance and/or the height between a foot step and a ramp, or the distance to the ground plane with respect to a vehicle and a platform or a railway or bus platform adjacent to which the vehicle is to stop.

Therefore there has been a need for a monitoring or supervising system, which is formed, considering its clamp protection system, so as to indicate
- when an object or a person is approaching a door that is under closing movement, or is eventually under opening movement,
- or which indicates and adapts the expelling length and/or the expelling height of a foot step or a walking bridge to the distance and/or the height to the ground or to a railway or bus platform, adjacent to which a vehicle is to stop,
- and which monitors that a foot step has been expelled or has been moved down before a door is opened, and
- that the footstep is not retracted until the door has been closed.
   The invention is more particularly directed to such a safety system, in which there are used small monitoring cameras of the digital camera technique type which monitor the contours only of objects, and which have been implemented in the door or foot step system. The invention is intended to provide a monitoring or supervision thereby providing a safety in the clamp protection means operating so that, for instance
- no object or person is present close to, or is approaching a door which is being closed or is being opened;
- a foot step is expelled prior to opening of the doors and/or is not retracted until the doors have been fully closed;
- the foot step is expelled to an optimum position considering the differing distance between the vehicle and the platform or the height to the ground plane;
- the footstep is directed to a correct horizontal position considering how heavy or lightly loaded the vehicle is, and how high the platform or the debarkation place is located.

DE 196 19 688 and EP 0 853 299 disclose a method of acquiring an image of an operation area using a video camera for comparing, preferably at very short intervals, an actual camera image with an image which is stored in an image processor, and which allows a function of a working machine only when the actual camera image is identical to the image which is stored in the image processor.

In said known methods and apparatus the entire image is investigated concerning all details thereof, and therefore many data are analysed which are not relevant for an apparatus according to the present invention. A less amount of analysed data, as in the present invention, gives a safer monitoring. In the present invention there is no need for storing images of persons, and therefore the personal integrity is not affected. There is also no need for having personal supervision of one or more monitoring screens all the time but only when alarm is given. There is no risk of boring routines in the supervision process, and there are needed very little personnel and there is obtained a less supervision cost.

The system according to the present invention operates quicker and is a cheaper system than said priorly known systems since the system of the present invention makes use of fewer and cheaper system components.

The present system, which scans only contours of objects, indicate obvious changes of the image as compared with known systems in which a complete image is monitored in detail, whereby changes in the gray scale of the picture is monitored in small steps. This makes it difficult to distinctly determine whether or not the scanned reference points are identical. In the present invention, in which only a contour or a profile is scanned is safer and more exact.

EP 0 852 313 discloses a door supervising system comprising a CCD or a video camera for monitoring the movement range of a sliding door and which is connected to evaluation device having a microprocessor to detect an obstacle in the path of the movement for the sliding door.

Said known patent suffers from the same disadvantages as those discussed above.

The invention makes use of so called "digital camera technique having automatic image treatment" of the same type as is used in digital reading pens which read the contours of text and send such information to a computer for various types of image treatment and other use, and in which the digital camera is, in this connection, used instead of a reading pen.

Thus, according to the invention the digital camera is scanning the contours only of an observed object or an observed person and is further observing and registering changes in the overall light conditions received by the digital camera. Therefore said camera operates quicker and safer and at less costs as compared with the discussed previously known systems.

According to the invention there are used small type, or very small type cameras mounted at strategic places, for instance obliquely above the door leafs and the footsteps, for detecting motions and/or changes in light, so as to thereby monitoring if there is some obstacle in the passage of the door and/or the footstep, or if an object is approaching the door leaf or the footstep while the doors are being opened or are being closed. In the system a reference image or picture showing the contours of a normal situation is compared with the contours of each actual image or picture obtained from a camera, and said actual images are analysed at given intervals, especially with a frequency of several images per second. Each image frame is analysed separately, and thereby there is obtained an indication of existing differences in relation to the reference image. It is also possible to see from the images where the door leafs and the footstep, respectively, are/is located, and a more close registration can be obtained the closer to each other the shutter doors come, and/or the closer the footstep comes to the platform or a similar structure while being expelled. Thereby it is possible to check the position, even of small objects, before the door leafs and/or the footsteps are allowed to be locked.

By camera monitoring or supervision of the said type of the position of the door leafs or the footsteps, respectively, there is obtained a touch free clamp protection means. If a person or an object should be present between the door leafs during the closing movement thereof this is momentarily observed by one or more monitoring cameras, whereby the interconnecting electronic door activator foresees that the movements of the door leafs are stopped, or is preferably reversed into a movement in the opening direction. The camera system acts in common with already available electronic control means for the doors, and eventually also for footsteps of vehicles, thereby providing a double control means for the safety. The camera system operates by scanning contours of objects approaching a door and this gives a quick and safe detecting of objects and determination what is the object in question. Only shapes and motions of objects approaching the door are considered. On the contrary no alarm indication is given for objects moving away from the door or parallelly to the door.

The system can be applied to many different types of doors like swinging doors, sliding doors, shutters that can be opened, or footsteps, expellable walking bridges or ramps and many other types of supporting structures, or to combinations of doors and footsteps. The system is very useful and desired and can also be used in for instance driver-free rail vehicles or vehicles having automatic steering. The system is useful both for electric door openers and footstep apparatus, or corresponding hydraulic of pneumatic apparatus.

The advantages of the new monitoring system is that:
- the system monitors (supervises) the closing of the door and provides a touch free clamp protection means which is activated already before the door leaf comes into engagement with any obstacle,
- the door is opened automatically already before there is a risk of clamping,
- the door is opened when anyone is approaching a door during its closing movement,
- the closing movement of the door is however pursued when someone moves away from the door or parallelly to same.

The invention is diagrammatically illustrated in the accompanying drawings. Figure 1 diagrammatically shows, at the left part of the drawing two single doors and, at the right part of the drawing one twin sliding door which is/are monitored in common by means of a camera system according to the invention. Figure 2 shows a side view of the mounting of a monitoring camera for making a three-dimensional monitoring possible both of a door, a footstep or a ramp. Figure 3 is an algorithm explaining the function of the apparatus according to the invention.

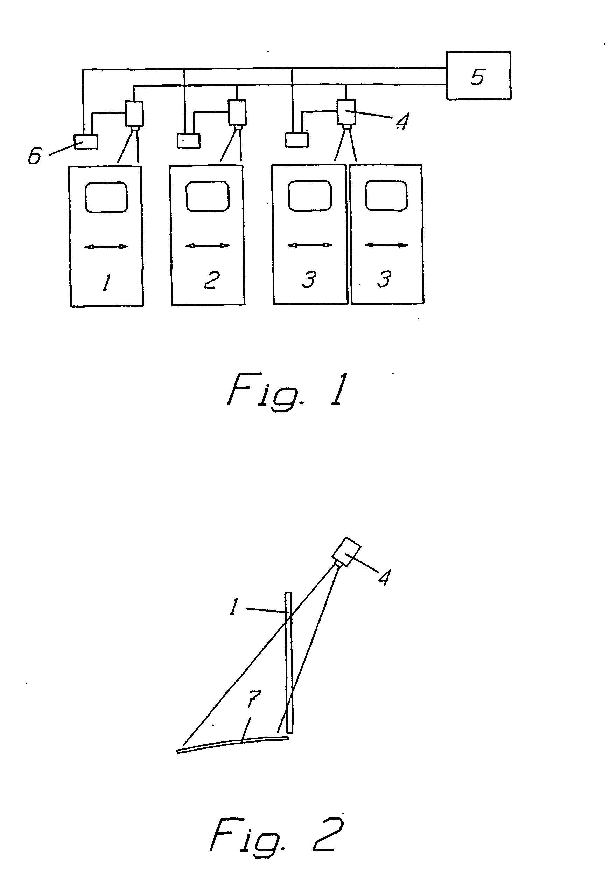

Thus, figure 1 shows a monitoring system according to the invention, in which two separate doors and one twin door is/are monitored, namely two single doors 1 and 2 and one twin door 3 of sliding door type. Said doors can be mounted in trains, in trams, in buses, in ships and other transport crafts and can be arranged as inner doors and or intermediate doors of real properties, on platforms, on air ports and on many other places.

The monitoring system comprises a little monitoring camera 4 of digital type, in particular of the known type referred to as "digital camera technics having automatic image treatment" and of the type which is used, among other things, in reading pens and which reads the countours of text and sends said information in digital form to a computer, in the illustrated case a computer equipment having a monitoring screen 5, for different types of image treatment and other use.

Such cameras produce a large amount of images per time unit, often with a relatively great number of images per second, in which each image element can be built by a very large number of dots (pixels). The computer and the monitoring screen 5 builds up an image and looks for (scans) contours of people and objects, whether said people or objects are still standing or are moving. The monitoring screen 5 also observes changes in the light conditions of the object or adjacent same.

In the illustrated case a camera 4 of the said type is mounted at the upper edge of each door 1, 2, 3, and all cameras are connected to a common computer/monitoring screen 5 which can be present in the drivers cabin of a train, a bus or another vehicle or at any other place to be monitored. At the same time the cameras 4 can be connected to the ordinary door electronic means for opening or closing of the door, respectively. It is also within the scope of the invention that the driver of the vehicle, or anyone, who wants to monitor the doors, can switch on any of the cameras for observing the positions of any of the doors or footsteps.

As shown in figure 2 the camera 4 can be mounted from inside obliquely downwards-outwards at the upper edge of a door, whereby the camera 4 can supervise both the opening phase of the door 1, 2, 3 and a footstep or a ramp 7 which is arranged to be fold out or expelled before the door is opened and to be retracted after the door has been closed. The camera also can observe the position of a platform, or of the ground plane under the door that can be opened. For making it possible that the camera, during the monitoring, should get at least a slight depth of field, so as to be able of monitoring both the movement of the door and the movement of the footstep, the camera can be placed in different ways from project to project.

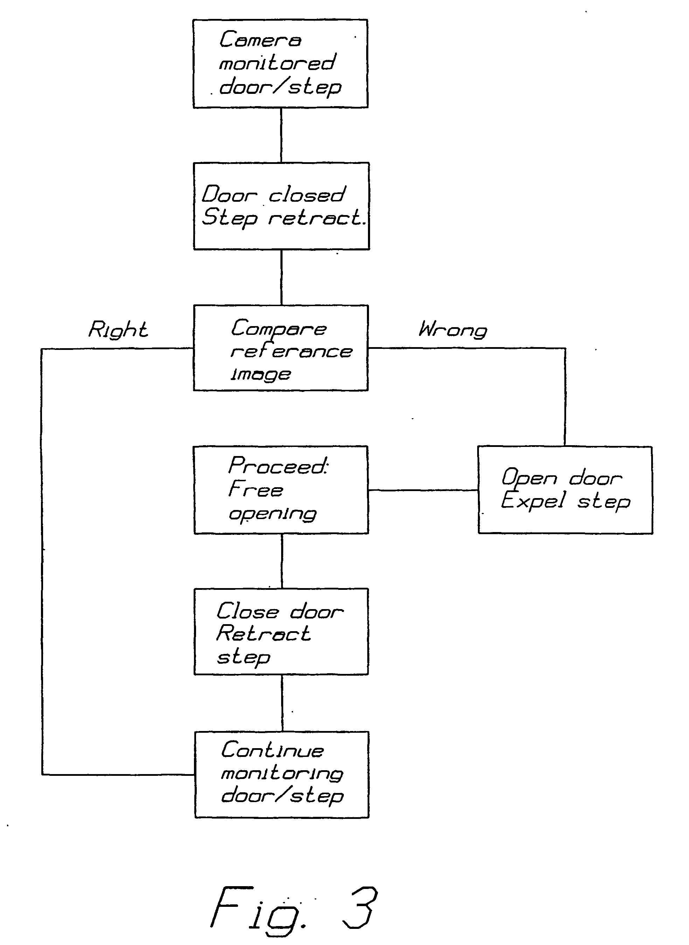

As diagrammatically shown in figure 3 the monitoring takes place as follows:
A. Opening of a door:
   When the vehicle has stopped, or in stationary door systems, the doors 1, 2, 3 normally can be opened without the risk of an accident. In the case that the door 1, 2, 3 is mounted on a vehicle and is eventually functionally interconnected to the footstep 7 it is important that the footstep is expelled (fold out) before the door is opened, so that there is no risk that the passenger be confronted with a too high step down from the train or the bus, or so that there is no space between the train or tram and the platform. As soon as the door has started being opened the camera 4 observes the position of the footstep 4, and if said footstep has not been fully expelled or fold out this immediately appears as a discrepancy at the continuous comparing process which is performed using the reference image which is stored in the supervision screen 5. Alarm is thereby given on the supervision screen 5 and this has as an effect that the door is immediately closed again. The fault is attended to, in this case in that a renewed supervision checking is made that the footstep has been expelled. If this has not been done the door is kept closed.
B. Entering and leaving through the opened door can be done without obstacles until the door starts being closed.
C. When the doors 1, 2, 3 are busy being closed the camera 4 constantly observes the doorway and the eventually existing footstep, and if the camera thereby notifies a change of light, especially overall light, or a movement of any object in the doorway this is noted by the supervision unit 5 by as a discrepancy in a comparing the camera image with the respective reference image, and this has as an effect that the door is immediately opened again.

Concurrently with the supervision of the doorway there is made a supervision of the position of the footstep 7. If said footstep should start moving, or the footstep should for some reason be retracted, a corresponding alarm is given in the supervision unit 5, and the door is reopened. It is important a) that the footstep 7 co-operates with the doors 1, 2, 3, b) that said footstep is expelled or is fold down before the door is opened, and c) that the footstep 7 is not retracted or is not fold up until the door has been closed.

### REFERENCE NUMERALS

1 door
2 door
3 twin sliding door
4 camera
5 monitoring/supervision screen
6 door electronic means
7 footstep, ramp

## Claims

1. A method in a clamp protection apparatus and other safety systems for doors and footsteps etc., especially in vehicles like trains, trams, buses, ships and other transport crafts, in swinging doors, slidable doors, shutters, slidable roof valves etc., in real properties, in platforms and in other places for avoiding accidents which might otherwise occur if the doors are unintentionally being opened or are being closed while a person or an object is present in the doorway or is approaching the door, for instance accidents in that persons or objects fall out or is/are alternatively clamped between the doors or at the rear edge of the door, or if a footstep is raised or lowered or is expelled or is retracted, respectively, while a person or an object is approaching said footstep, or if co-operating, preferably synchronised footsteps and doors, is a non allowed position with respect to opening or closing, respectively, of he door, and in which there is used a monitoring (supervision) camera (4) of the type named "digital camera technics having automatic image treatment", which reads (scans) the contours of objects and transmits said information to a monitoring (supervision) computer (5) for different types of image treatment and other use, and in which such a camera (4) is mounted obliquely above each door (1-3) to be monitored, **characterized in**
**that** each camera (4) is connected to a central computer having a monitoring screen (5) to which also the ordinary opening and closing door electronic means (6) is connected,
**that** the contour images are transmitted to the monitoring screen (5) at short intervals by each camera (4),
**that** said contour images from each camera (4) are frequently compared with a stationary reference image for the respective camera place, which stationary reference image is stored in the monitoring screen (5),
and **that** alarm is given as soon as a contour image received from a camera (4) differs from the reference contour image of the monitoring screen (5), whereby the door (1-3) in question is opened or is maintained closed, respectively, until the monitoring screen (5) observes that the received contour image coincides with said reference image.

2. A method according to claim 1, **characterized in that** the monitoring camera transmits a large number of images per time unit, whereby each transmitted image is compared with the reference image of the monitoring camera (5).

3. A method according to claim 1 or 2, **characterized in that** each camera (4) scans the contours of an observed object or an observed person and changes in light conditions of, or around the observed object or the observed person.

4. A method according to claim 1, 2 or 3, **characterized in that** each camera (4) is mounted so that it can monitor both the doorway of the door (1-3) and the position of the footstep (7) or the ramp, or the distance to an adjacent platform, or the distance to the ground, and that the footstep (7) is expelled or is fold down before the door (1-3) is opened, and that the footstep (7) is not retracted or fold up until the door (1-3) has been closed.

5. Apparatus for executing the method according to any of the preceding claims, comprising a monitoring (supervision) unit for each door (1-3) and a computer having a monitoring screen (5), **characterized in that** the monitoring unit at each door is a camera (4) of the type named "digital camera technics having automatic image treatment" which is arranged to transmit information to the monitoring screen (5) for different types of image treatment and other use, and in which the camera (4) is mounted obliquely above each door (1-3) to be monitored.

6. Apparatus according to claim 5, **characterized in that** the monitoring screen (5) is formed with a reference image for each camera and its door, and in which each image received from the camera (4) is arranged to be compared with said reference image of the monitoring screen (5), and in which the monitoring screen (5), in case of an existing discrepancy between the camera image and said reference image, is arranged to give alarm resulting in a maintained closed position of the door, or alternatively an opening phase of a door which is being closed.

7. Apparatus according to claim 5 or 6, **characterized in that** the camera (4) is arranged to issue a large number of images per time unit, preferably between six and twenty images per second, and that the monitoring screen (5) is arranged to analyse each received image and to compare same with a reference image which is stored in the monitoring screen.

8. Apparatus according to any of claims 5-7, **characterized in that** each camera (4) is formed for scanning the contours of a monitored object and/or changes in the light conditions.

9. Apparatus according to any of claims 5-8, **characterized in that** it comprises a footstep or a ramp (7) the function of which is synchronised with the opening function of the doors (1-3), and in which the positions of both the doorway and the footstep or ramp (7) are scanned by the corresponding camera (4).

10. Apparatus according to any of claims 5-9, **characterized in that** each camera (4) is associated to the ordinary opening and dosing electronic means (6) for the respective monitored door, having or not having a footstep (7).

## Patentansprüche

1. Verfahren in einer Einklemmschutzeinrichtung und in anderen Sicherheitssystemen für Türen und Stufen usw., insbesondere in Fahrzeugen wie z.B. Zügen, Straßenbahnen, Bussen, Schiffen und anderen Transportfahrzeugen, in Schwingtüren, Schiebetüren, Rolläden, verschieblichen Dachventilen usw., in Immobilien, Plattformen und an anderen Orten zur Vermeidung von Unfällen, die sonst passieren können, wenn die Türen unabsichtlich geöffnet oder geschlossen werden, während eine Person oder ein Gegenstand sich in der Türöffnung befindet oder sich der Tür nähert, zum Beispiel von Unfällen, bei denen Personen bzw. Gegenstände aus dem Fahrzeug fallen oder zwischen den Türen oder an der Hinterkante der Tür eingeklemmt werden, oder wenn Stufen gehoben oder gesenkt oder aus- bzw. eingefahren werden, während eine Person oder ein Gegenstand sich diesen Stufen nähert, oder wenn zusammenwirkende, vorzugsweise synchronisierte Stufen und Türen sich in einer nicht zulässigen Stellung relativ zum Öffnungs- bzw. Schließvorgang der Tür befinden, und bei dem eine nach der sogenannten Digitalkameratechnologie mit automatischer Bildverarbeitung ausgebildete Kontroll- (Überwachungs-)-kamera (4), welche die Konturen der Gegenstände liest (abtastet) und diese Information zu verschiedenen Arten von Bildverarbeitung sowie zu anderen Zwecken an einen Kontroll- (Überwachungs-)-Rechner (5) sendet, verwendet wird, und bei dem eine derartige Kamera (4) schräg über jede zu überwachende Tür (1-3) montiert wird, **dadurch gekennzeichnet,**
**dass** jede Kamera (4) mit einem zentralen Rechner mit einem Überwachungsbildschirm (5), mit dem auch die üblichen elektronischen Mittel (6) zum Öffnen und Schließen der Tür verbunden sind, verbunden ist,
**dass** die Konturbilder in kurzen Abständen von jeder Kamera (4) an den Überwachungsbildschirm (5) übertragen werden,
**dass** die von jeder Kamera (4) stammenden Konturbilder häufig mit einem feststehenden Referenzbild für den jeweiligen Kameraort verglichen werden,, wobei das feststehende Referenzbild in dem Überwachungsbildschirm 5 abgespeichert ist,
und **dass** ein Alarmsignal ausgegeben wird, sobald ein von einer Kamera (4) aufgenommenes Konturbild sich von dem Referenzkonturbild des Überwachungsbildschirms (5) unterscheidet, wobei die betreffende Tür (1-3) geöffnet, bzw. geschlossen gehalten wird, bis der Überwachungsbildschirm (5) erkennt, dass das aufgenommene Konturbild mit dem Referenzbild übereinstimmt.

2. Verfahren nach Anspruch 1, **dadurch gekennzeichnet, dass** die Überwachungskamera pro Zeiteinheit eine große Anzahl an Bildern überträgt, wobei jedes übertragene Bild mit dem Referenzbild der Überwachungskamera (5) verglichen wird.

3. Verfahren nach Anspruch 1 oder 2, **dadurch gekennzeichnet, dass** jede Kamera (4) die Kontur eines beobachteten Gegenstands oder einer beobachteten Person sowie Änderungen in den Lichtverhältnissen an bzw. um den betrachteten Gegenstand bzw. Person abtastet.

4. Verfahren nach Anspruch 1, 2 oder 3, **dadurch gekennzeichnet, dass** jede Kamera (4) derart montiert wird, dass sie sowohl die Türöffnung der Tür (1-3) als auch die Stellung der Stufen (7) oder der Rampe, oder die Entfernung zu einer angrenzenden Plattform, oder den Abstand zum Boden überwachen kann, und dass die Stufen (7) ausgefahren oder ausgefaltet werden, bevor die Tür (1-3) geöffnet wird, und dass die Stufen (7) solange nicht eingefahren bzw. eingeklappt werden, bis die Tür (1-3) geschlossen wurde.

5. Vorrichtung zum Ausführen des Verfahrens nach einem der vorstehenden Ansprüche, umfassend eine Kontroll-(Überwachungs-)-Einheit für jede Tür (1-3) und einen Rechner mit einem Überwachungsbildschirm (5), **dadurch gekennzeichnet, dass** die Überwachungseinheit an jeder Tür eine nach der sogenannten Digitalkameratechnologie mit automatischer Bildverarbeitung ausgebildete Kamera (4) ist, die derart ausgestaltet ist, dass sie Informationen an den Überwachungsbildschirm (5) für verschiedene Bildbearbeitungsarten und andere Zwecke überträgt, und in dem die Kamera (4) schräg oberhalb einer jeden zu überwachenden Tür (1-3) montiert ist.

6. Vorrichtung nach Anspruch 5, **dadurch gekennzeichnet, dass** der Überwachungsbildschirm (5) mit einem Referenzbild für jede Kamera und ihre Tür ausgebildet ist, und in dem jedes von der Kamera (4) aufgenommene Bild mit dem Referenzbild des Überwachungsbildschirms (5) verglichen werden kann, und in dem der Überwachungsbildschirm (5) bei einer Diskrepanz zwischen dem Kamerabild und dem Referenzbild so ausgestaltet ist, dass er ein Alarmsignal ausgibt, woraufhin die Tür geschlossen bleibt oder eine sich schließende Tür wieder geöffnet wird.

7. Vorrichtung nach Anspruch 5 oder 6, **dadurch gekennzeichnet, dass** die Kamera (4) derart ausgebildet ist, dass sie pro Zeiteinheit eine große Anzahl an Bildern, vorzugsweise zwischen sechs und zwanzig Bilder pro Sekunde,, liefert und dass der Überwachungsbildschirm (5) ausgestaltet ist, um jedes der aufgenommenen Bilder zu analysieren und mit einem in dem Überwachungsbildschirm abgespeicherten Referenzbild zu vergleichen.

8. Vorrichtung nach einem der Ansprüche 5-7, **dadurch gekennzeichnet, dass** jede Kamera (4) ausgebildet ist, um die Konturen eines überwachten Gegenstands und/oder Änderungen in den Lichtverhältnissen abzutasten.

9. Vorrichtung nach einem der Ansprüche 5-8, **dadurch gekennzeichnet, dass** sie Stufen oder eine Rampe (7) aufweist, deren Betrieb mit der Öffnung der Türen (1-3) synchronisiert ist, und in der die Stellungen sowohl der Türöffnung als auch der Stufen oder der Rampe (7) von der entsprechenden Kamera (4) abgetastet werden.

10. Vorrichtung nach einem der Ansprüche 5-9, **dadurch gekennzeichnet, dass** jede Kamera (4) den üblichen elektronischen Mitteln (6) zum Öffnen und Schließen der jeweiligen überwachten Tür zugeordnet ist, unabhängig davon ob diese mit oder ohne Stufen (7) ausgebildet ist.

## Revendications

1. Procédé dans un dispositif de protection destiné à empêcher tout coincement et dans d'autres systèmes de sécurité pour portes et marches etc., notamment dans des véhicules tels que des trains, des tramways, des bus, des bateaux et autres véhicules de transport, sur des portes battantes, des portes coulissantes, des volets, des clapets de toit coulissants, etc. et dans des immeubles, sur des quais ou à d'autres endroits, ledit procédé permettant d'éviter les accidents susceptibles de survenir si les portes sont ouvertes ou fermées intempestivement alors qu'une personne ou un objet se trouve dans l'embrasure de la porte ou est en train de s'approcher de la porte, par exemple les accidents du type où la personne ou l'objet tombe du véhicule ou bien reste coincée entre les portes, ou dans le bord arrière de la porte, ou lorsque des marches sont montées ou abaissées ou bien déployées ou repliées alors qu'une personne ou un objet quelconque est en train de s'approcher de ces marches ou lorsque des marches et des portes coopérant les unes avec les autres et de préférence synchronisées entre elles se trouvent dans une position non admissible pendant l'ouverture ou la fermeture de la porte et selon lequel on utilise une caméra de contrôle (de surveillance) (4) du type appelé « caméra numérique avec traitement d'images automatique » qui lit (balaye) les contours d'objets et transmet cette information à un ordinateur de contrôle (de surveillance) (5) pour différents types de traitement d'images et à d'autres fins et selon lequel une telle caméra (4) est montée de biais au-dessus de chaque porte (1-3) destinée à être surveillée, **caractérisé en ce**
**que** chaque caméra (4) est reliée à un ordinateur central comportant un écran de surveillance (5) auquel sont également reliés les moyens électroniques (6) d'ouverture et de fermeture de la porte,
**que** les images des contours sont transmises à l'écran de surveillance (5) à brefs intervalles par chaque caméra (4),
**que** les images des contours prises par chaque caméra (4) sont fréquemment comparées à une image de référence stationnaire pour l'emplacement de la caméra respective, cette image de référence stationnaire étant stockée dans l'écran de surveillance (5),
et **qu'**une alarme est donnée dès qu'une image de contours envoyée par une caméra (4) diffère de l'image de contours de référence stockée dans l'écran de surveillance (5), et qu'on ouvre ou maintient fermée la porte (1-3) en question jusqu'à ce que l'écran de surveillance (5) constate que l'image de contours reçue coïncide avec cette image de référence.

2. Procédé selon la revendication 1, **caractérisé en ce que** la caméra de surveillance transmet un nombre élevé d'image par unité de temps, chaque image transmise étant comparée à l'image de référence de la caméra de surveillance (5).

3. Procédé selon la revendication 1 ou 2, **caractérisé en ce que** chaque caméra (4) balaye les contours d'un objet ou d'une personne observée ainsi que des changements dans la luminosité de l'objet ou de la personne observée ou de leur entourage.

4. Procédé selon la revendication 1, 2 ou 3, **caractérisé en ce que** l'on installe chaque caméra (4) de manière à pouvoir surveiller à la fois l'embrasure de la porte (1-3) et la position des marches (7) ou de la rampe, ou la distance jusqu'à un quai adjacent ou la distance au sol et que l'on déploie ou abaisse les marches (7) avant que la porte (1-3) ne s'ouvre et que l'on ne replie ou ne remonte pas les marches (7) tant que la porte (1-3) n'est pas fermée.

5. Dispositif pour mettre en oeuvre le procédé selon l'une quelconque des revendications précédentes, du type comportant une unité de contrôle (de surveillance) pour chaque porte (1-3) et un ordinateur comportant un écran de surveillance (5), **caractérisé en ce que** l'unité de contrôle installée sur chaque porte est une caméra (4) du type « caméra numérique avec traitement d'images automatique » qui est adaptée pour transmettre des informations à l'écran de surveillance (5) pour différents types de traitement d'images et à d'autres fins et selon lequel la caméra (4) est montée de biais au-dessus de chaque porte (1-3) destinée à être surveillée.

6. Dispositif selon la revendication 5, **caractérisé en ce que** l'écran de surveillance (5) est réalisé avec une image de référence pour chaque caméra et sa porte et dans lequel chaque image prise par la caméra (4) est adaptée à être comparée à l'image de référence dans l'écran de surveillance (5) et dans lequel, dans le cas où une différence est constatée entre l'image prise par la caméra et l'image de référence, l'écran de surveillance (5) est adapté à donner un signal d'alarme à la suite duquel la porte est soit maintenue fermée soit réouverte si elle est train de se fermer.

7. Dispositif selon la revendication 5 ou 6, **caractérisé en ce que** la caméra (4) est adaptée pour émettre un nombre élevé d'images par unité de temps, de préférence entre six et vingt images par seconde, et que l'écran de surveillance (5) est adapté pour analyser chacune des images prises et pour la comparer avec une image de référence qui est stockée dans l'écran de surveillance.

8. Dispositif selon l'une quelconque des revendications 5-7, **caractérisé en ce que** chaque caméra (4) est réalisée pour balayer les contours d'un objet surveillé et/ou des changements dans la luminosité.

9. Dispositif selon l'une quelconque des revendications 5-8, **caractérisé en ce qu'**il comporte des marches ou une rampe (7) dont le fonctionnement est synchronisé avec l'ouverture des portes (1-3), et dans lequel les positions tant de l'embrasure de la porte que des marches ou de la rampe (7) sont balayées par la caméra (4) correspondante.

10. Dispositif selon l'une quelconque des revendications 5-9, **caractérisé en ce que** chaque caméra (4) est associée au moyen électronique (6) classique d'ouverture et de fermeture de la porte surveillée respective, que celle-ci comporte des marches (7) ou non.
